# FASCICULE DE BREVET EUROPEEN

(11) **EP 3 835 193 B1**
(45) Date de publication et mention de la délivrance du brevet: **12.10.2022**
(21) Numéro de dépôt: 20208438.0
(22) Date de dépôt: 18.11.2020
(51) Int. Cl.: B63B 17/00, H01M 50/209, H01M 50/249, H01M 50/262

(54) **SYSTÈME DE FIXATION D'UNE PLURALITÉ DE PACKS BATTERIE DE FAÇON EMPILÉE LES UNS SUR LES AUTRES À BORD D'UN NAVIRE COMPRENANT DES CALES RÉGLABLES, BLOC D'ALIMENTATION ET PROCÉDÉ DE FIXATION ASSOCIÉS**
SYSTEM ZUM SICHERN EINER VIELZAHL VON BATTERIE-PACKS IN GESTAPELTER WEISE ÜBEREINANDER AN BORD EINES SCHIFFES MIT EINSTELLBAREN UNTERLEGKEILEN, STROMVERSORGUNGSEINHEIT UND SICHERUNGSVERFAHREN DAFÜR
FIXING SYSTEM OF A PLURALITY OF BATTERY PACKS STACKED ON EACH OTHER IN A VESSEL COMPRISING ADJUSTABLE CHOCKS, ASSOCIATED ALIMENTATION BLOC AND FIXING METHOD

(30) Priorité: 19.11.2019 FR 1912867
(43) Date de publication de la demande: 16.06.2021
(73) Titulaire: Naval Group, 75015 Paris (FR)
(72) Inventeur: BODET, Ludovic, 56311 LORIENT CEDEX (FR); MAHE, Erwan, 56311 LORIENT CEDEX (FR); FERAL, Hervé, 56311 LORIENT CEDEX (FR)
(74) Mandataire: Lavoix

(56) Documents cités:
- WO-A1-2010/082040
- DE-A1- 3 617 866
- DE-A1-102012 014 775
- DE-A1-102015 217 630
- DE-C1- 19 628 398
- US-A1- 2002 079 152
- US-A1- 2012 249 077

## Description

La présente invention concerne un système de fixation d'une pluralité de packs batterie de façon empilée les uns sur les autres à bord d'un navire. Ce système comprend notamment une pluralité de cales réglables.

La présente invention concerne également un bloc d'alimentation et un procédé de fixation associés.

Par navire, on entend tout engin apte à naviguer sur la surface maritime (tel qu'un bateau) et éventuellement submersible (tel qu'un sous-marin).

De manière connue en soi, pour mettre en oeuvre ses différentes fonctionnalités, les navires utilisent souvent de l'énergie électrique stockée dans des batteries embarquées.

Ces batteries se présentant généralement sous la forme de packs d'accumulateurs, appelés également packs batterie, doivent être adaptées au fonctionnement dans un environnement très instable, présentant parfois des chocs importants.

Cet environnement peut également subir des dilations importantes liées à des conditions thermiques variables.

Ainsi, pour assurer une bonne fixation des packs batterie dans un tel environnement, il est connu d'installer ces packs dans un local spécial adapté à cet effet.

En particulier, il est connu d'utiliser des crochets sur le fond des packs batterie permettant de les accrocher au plancher du local et ainsi, de les bloquer verticalement.

Pour assurer un blocage horizontal, il est connu d'utiliser des calles, coins, tasseaux, etc. entre différents packs batterie ou alors entre ces packs batterie et les murs du local.

Les documents DE 10 2015 217630, DE 36 17 866, DE 10 2012 014775 A1, US 2002/079152 A1, DE 196 28 398 C1 et WO 2010/082040 A1 divulguent des systèmes de fixation de packs batteries.

On conçoit alors que cela impose de nombreuses contraintes d'installation de ces packs batterie. Ces contraintes imposent par exemple l'installation des packs batterie en une seule couche ce qui conduit, bien entendu, à des pertes d'espace importantes.

La présente invention a pour but de remédier à ces inconvénients et de proposer un système de fixation permettant d'installer des packs batterie de façon empilée les uns sur les autres et cela dans un environnement très instable.

À cet effet, l'invention a pour objet un système de fixation d'une pluralité de packs batterie de façon empilée les uns sur les autres à bord d'un navire, le navire comportant un local batterie dont la longueur s'étend selon un axe X et est délimitée par un mur de fond, la largeur s'étend selon un axe Y et est délimitée par deux murs latéraux et la hauteur s'étend selon un axe Z et est délimitée par un plancher et un plafond ;
chaque pack batterie présentant une forme sensiblement parallélépipédique définissant deux parois latérales, une paroi proximale, une paroi distale), une paroi supérieure et une paroi inférieure, chaque paroi latérale définissant une pluralité de rainures de fixation ;
dans une position fixée, les packs batterie étant destinés à être posés en plusieurs couches sur le plancher du local batterie entre ses murs latéraux et contre le mur de fond, les packs batterie d'une même couche étant destinés à être posés l'un à côté de l'autre de façon adjacente par l'une de leurs parois latérales de sorte que les rainures de fixation de ces parois latérales soient disposées en regard et de sorte que les parois distales de ces packs soient adjacentes au mur de fond.
le système comprend une pluralité de crochets muraux, chaque crochet mural étant destiné à être monté sur le mur de fond en regard de la paroi distale d'un pack batterie dans la position fixée ;
   - une pluralité de crochets de fixation, chaque crochet de fixation étant destiné à être monté sur la paroi distale d'un pack batterie et à bloquer ce pack batterie dans la position fixée selon l'axe X par coopération avec le crochet mural lui correspondant ;
   - une pluralité de cales réglables, chaque cale réglable étant destinée à être insérée dans un orifice formé entre deux rainures de fixation de deux packs batterie mis dans la position fixée l'un à côté de l'autre dans une même couche, pour bloquer entre les murs latéraux les packs batterie selon l'axe Y par réglage de la cale réglable.

Suivant d'autres aspects avantageux de l'invention, le système comprend une ou plusieurs des caractéristiques suivantes, prise(s) isolément ou suivant toutes les combinaisons techniquement possibles :
- chaque cale réglable est extensible selon une direction d'extension et lorsqu'elle est insérée dans un orifice formé entre deux rainures de fixation de deux packs batterie mis dans la position fixée l'un à côté de l'autre dans une même couche, est adaptée pour que la direction d'extension coïncide avec l'axe Y ;
- chaque cale réglable présente une première partie comprenant une première paroi inclinée par rapport à la direction d'extension et une deuxième partie mobile par rapport à la première partie et comprenant une deuxième paroi inclinée par rapport à la direction d'extension et apte à glisser le long de la première paroi en modifiant l'extension de la cale selon la direction d'extension ; de préférence, chaque cale réglable comprenant en outre des moyens de réglage aptes à faire glisser la deuxième paroi le long de la première paroi ;
- une pluralité de supports latéraux, chaque support latéral comprenant une pluralité d'arêtes s'étendant selon une direction d'arête et configurées pour être reçues dans les rainures de fixation correspondantes lorsque le support latéral est disposé en regard d'une paroi latérale d'un pack batterie ;
   chaque support latéral étant destiné à être monté sur un mur latéral du local batterie en regard d'une paroi latérale d'un pack batterie dans la position fixée de sorte que la direction d'arête soit parallèle à l'axe Z ;
- chaque crochet mural est destiné à être monté sur le mur de fond de sorte à exercer une force dirigée selon l'axe Z vers le plancher sur le crochet de fixation monté sur la paroi distale du pack batterie dans la position fixée correspondant ;
- un pêne destiné à être monté sur la paroi distale d'un pack batterie d'une dernière couche de packs batterie, ledit pack batterie étant destiné à être fixé en dernière place et étant dit dernier pack batterie, le pêne étant adapté pour être engagé sous le crochet mural monté sur le mur de fond en regard de la paroi distale lorsque le dernier pack batterie est dans la position fixée et pour bloquer ce pack selon l'axe Z;
- un support rapporté destiné à être monté sur la paroi supérieure du dernier pack batterie ; et
- un loquet comprenant :
   + une base destinée à être montée au plafond en regard de la paroi supérieure du dernier pack batterie lorsqu'il est dans la position fixée ;
   + une butée montée sur la base avec un ressort et configurée pour laisser passer le support rapporté monté sur le dernier pack batterie lorsque le dernier pack batterie est inséré selon l'axe X vers le mur de fond et pour bloquer ce dernier pack selon l'axe X lorsque le support rapporté se trouve entre la base et le mur de fond ;
- un premier profil destiné à être monté sur la paroi distale d'un pack batterie d'une dernière couche de packs batterie, ledit pack batterie étant destiné à être fixé en dernière place et étant dit dernier pack batterie ;
- un deuxième profil destiné à être monté sur le mur de fond en regard de la paroi distale du dernier pack batterie lorsque celui-ci est dans la position fixée, le deuxième profil étant adapté pour être fixé sur le premier profil via une trappe prévue au plafond pour bloquer le dernier pack batterie selon l'axe X ;
- un crochet mural amovible destiné à être monté sur le mur de fond en regard de la paroi distale d'un pack batterie d'une dernière couche de packs batterie, ledit pack batterie étant destiné à être fixé en dernière place et étant dit dernier pack batterie ;
   le crochet mural amovible étant adapté pour glisser sur le crochet de fixation du dernier pack batterie lorsque ce pack batterie est dans la position fixée et pour être fixé dans cette position via une trappe prévue au plafond en bloquant le dernier pack batterie selon l'axe X, et
- une barre à calles réglables destinée être disposée entre une dernière couche de packs batterie et le plafond, et est configurée pour bloquer cette couche contre le plafond selon l'axe Z.

La présente invention a également pour objet un procédé de fixation de fixation d'une pluralité de packs batterie de façon empilée les uns sur les autres à bord d'un navire, mis en oeuvre au moyen du système de fixation tel que défini précédemment et comportant les étapes suivantes :
- monter les crochets muraux sur le mur de fond ;
- monter les crochets de fixation sur les parois distales des packs batterie ;
- constituer une première couche de packs batterie ou une couche de packs de batterie intermédiaire :
   + en posant chaque pack batterie au plancher couvert d'une mousse parasismique ou à un pack batterie d'une couche de packs batterie inférieure entre deux crochets muraux correspondant à cette couche ;
   + en faisant glisser chaque pack batterie vers l'un des murs latéraux de sorte à engager son crochet de fixation dans le crochet mural correspondant ; et
   + en engageant le crochet de fixation d'un pack batterie finalisant la couche dans le crochet mural correspondant et puis, en pivotant ledit pack batterie vers le plancher pour le mettre en position fixée ;
- insérer les cales réglables entre les packs batterie d'une couche de packs batterie posée ;
- régler les cales réglables pour bloquer les packs batterie de la couche posée selon l'axe Z ;
- constituer une dernière couche de packs batterie :
   + en posant chaque pack batterie à un pack batterie d'une couche de packs batterie inférieure entre deux crochets muraux correspondant à cette couche ;
   + en faisant glisser chaque pack batterie vers l'un des murs latéraux de sorte à engager son crochet de fixation dans le crochet mural correspondant ; et
   + en bloquant un dernier pack batterie positionné selon l'axe X ;
- en bloquant la dernière couche de packs batterie contre le plafond selon l'axe Z.

La présente invention a également pour objet un bloc d'alimentation d'un navire, le navire comportant un local batterie dont la longueur s'étend selon un axe X et est délimitée par un mur de fond la largeur s'étend selon un axe Y et est délimitée par deux murs latéraux et la hauteur s'étend selon un axe Z et est délimitée par un plancher et un plafond ;
le bloc d'alimentation comprenant une pluralité de packs batterie fixés de façon empilée les uns sur les autres ;
chaque pack batterie présentant une forme sensiblement parallélépipédique définissant deux parois latérales, une paroi proximale, une paroi distale, une paroi supérieure et une paroi inférieure, chaque paroi latérale définissant une pluralité de rainures de fixation ;
le bloc d'alimentation étant destiné à être installé dans le local batterie de sorte que les packs batterie soient posés en plusieurs couches sur le plancher du local batterie entre ses murs latéraux et contre le mur de fond, les packs batterie d'une même couche étant posés l'un à côté de l'autre de façon adjacente par l'une de leurs parois latérales de sorte que les rainures de fixation de ces parois latérales soient disposées en regard et de sorte que les parois distales de ces packs soient adjacentes au mur de fond ;
le bloc d'alimentation comprenant en outre un système de fixation tel que décrit précédemment pour fixer les packs batterie dans le local batterie.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique en perspective d'une coque d'un navire en coupe transversale, la coque définissant un local batterie ;
- [Fig 2] la figure 2 est une vue schématique en perspective d'un pack batterie destiné à être installé dans le local batterie de la figure 1 au moyen d'un système de fixation selon l'invention ;
- [Fig 3] la figure 3 est une vue schématique en perspective d'un crochet mural faisant partie du système de fixation selon l'invention, les crochets muraux étant disposés sur le mur de fond du local batterie de la figure 1 ;
- [Fig 4] la figure 4 est une vue schématique en perspective d'une cale réglable faisant partie du système de fixation selon l'invention ;
- [Fig 5] la figure 5 est une vue schématique en perspective d'un support latéral faisant partie du système de fixation selon l'invention, les supports latéraux étant disposés sur des murs latéraux du local batterie de la figure 1 ;
- [Fig 6] la figure 6 est une vue schématique en perspective d'une barre à calles réglables faisant partie du système de fixation selon l'invention ;
- [Fig 7] la figure 7 est une vue schématique de côté illustrant la fixation d'un dernier pack batterie au mur de fond du local batterie de la figure 1, selon un premier exemple de réalisation ;
- [Fig 8] la figure 8 est une vue schématique de côté illustrant la fixation d'un dernier pack batterie au mur de fond du local batterie de la figure 1, selon un deuxième exemple de réalisation ;
- [Fig 9] la figure 9 est une vue schématique en perspective illustrant la fixation d'un dernier pack batterie au mur de fond du local batterie de la figure 1, selon un troisième exemple de réalisation ;
- [Fig 10] la figure 10 est une vue schématique en perspective illustrant la pose de premières couches de packs batterie sur le plancher du local batterie de la figure 1, au moyen du système de fixation selon l'invention ; et
- [Fig 11] la figure 11 est une vue schématique en perspective illustrant la fixation de la barre à calles réglables de la figure 6, la figure 11 illustrant en outre un bloc d'alimentation selon l'invention dans l'état assemblé.

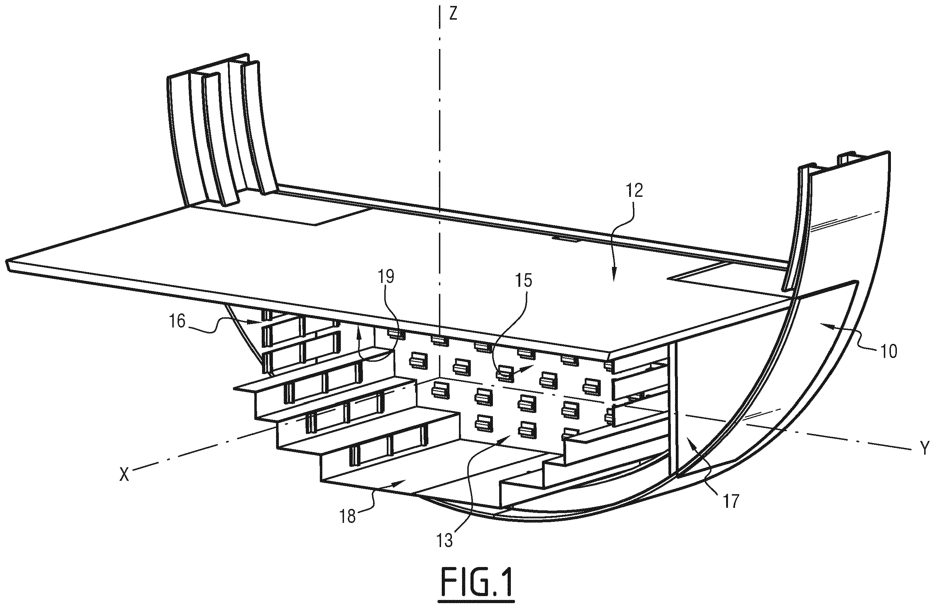

On a en effet représenté sur la figure 1 une coque 10 d'un navire.

Par navire, il est entendu tout engin se déplaçant sur la surface maritime tel qu'un bateau ou un engin submersible tel qu'un sous-marin.

La coque 10 présente une forme étendue selon un axe central. Cet axe sera dénoté par la suite comme axe X.

L'axe X est perpendiculaire à un axe transversal qui sera alors dénoté par la suite comme axe Y.

Dans l'exemple de la figure 1, la coque 10 présente une forme générale cylindrique dont seulement la partie basse est visible sur la figure 1. Cette partie basse présente une forme arrondie définissant notamment un arc de cercle dans chaque coupe transversale.

Bien entendu, dans un cas général, la coque 10 peut présenter toute autre forme connue d'un navire.

La figure 1 fait par ailleurs apparaître une paroi 12 s'étendant transversalement par rapport à la coque 10 dans un plan formé par les axes X et Y.

Cette paroi 12 délimite un local batterie 13 disposé dans la partie basse de la coque 12.

La longueur du local 13 s'étend selon l'axe X entre deux murs dont seulement un est visible sur la figure 1. Ce mur sera appelé par la suite mur de fond 15.

La largeur du local 13 s'étend selon l'axe Y et est délimitée par deux murs latéraux 16 et 17.

Enfin, la hauteur du local 13 s'étend selon un axe Z perpendiculaire aux axes X et Y, entre un plancher 18 et un plafond 19.

Le mur de fond 15 est par exemple sensiblement plat.

Le plafond 19 est également par exemple sensiblement plat et est formé par une partie de la paroi 12 disposée en regard du local batterie 13.

Quant aux murs latéraux 16, 17 et le plancher 18, ceux-ci présentent des surfaces cascadées selon la forme arrondie de la coque 10 en formant ainsi des marches.

En particulier, comme cela est visible sur la figure 1, chacun des murs latéraux 16, 17 présente une portion plate adjacente au plafond 19 et une portion cascadée adjacente au plancher 18.

La portion cascadée de chacun des murs latéraux 16, 17 présente ainsi une pluralité de surfaces plates s'étendant selon l'axe X et écartées les unes par rapport aux autres selon l'axe Y. Ces surfaces plates forment alors des parties verticales des marches ou des contremarches.

De manière analogue, le plancher 18 présente une portion plate et une portion cascadée.

La portion cascadée est également constituée d'une pluralité de surfaces plates qui s'étendent dans ce cas selon l'axe X et sont écartées les unes par rapport aux autres selon l'axe Z. Ces surfaces plates forment alors des parties horizontales des marches.

Sur la figure 1, les murs latéraux 16, 17 et le plancher 18 définissent trois marches de côté de chaque mur latéral 16, 17.

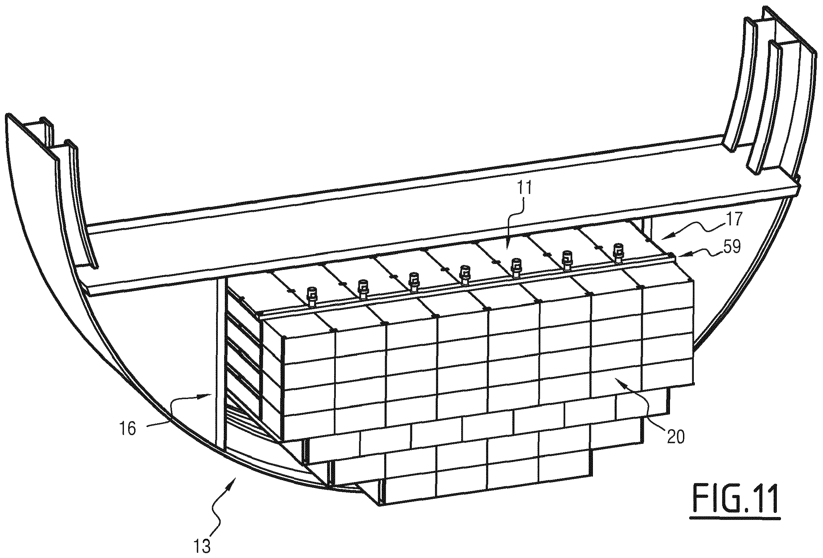

Le local batterie 13 est adapté pour recevoir un bloc d'alimentation 11 selon l'invention. Ce bloc d'alimentation dans l'état assemblé est visible sur la figure 11 et comprend notamment une pluralité de packs batterie 20.

Ces packs batterie 20 sont par exemple sensiblement analogues entre eux.

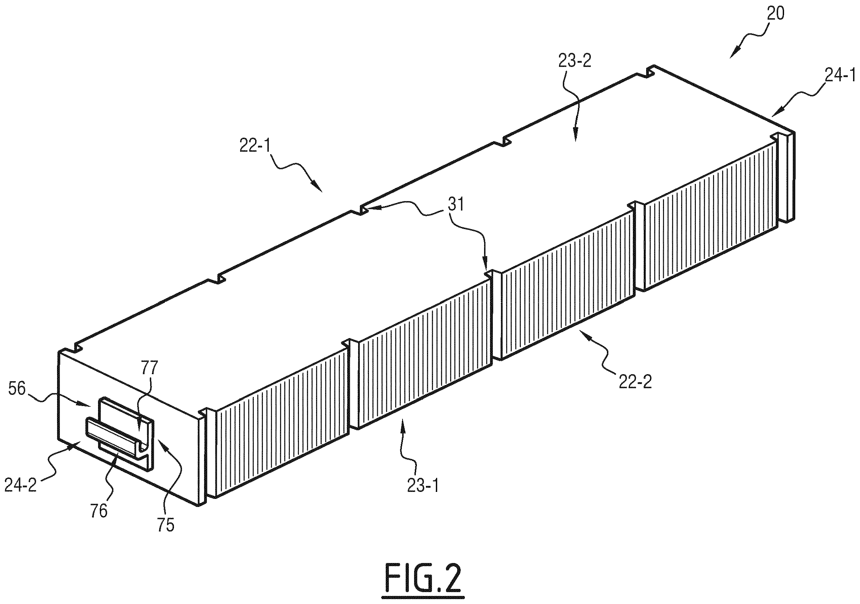

L'un de ces packs 20 est illustré sur la figure 2.

En particulier, comme cela est visible sur cette figure 2, le pack batterie 20 présente une forme sensiblement parallélépipédique.

Autrement dit, le pack batterie 20 définit deux parois latérales désignées sur la figure 2 sous les références 22-1 et 22-2.

Le pack batterie 20 définit en outre une paroi inférieure 23-1 et une paroi supérieure 23-2 ainsi qu'une paroi proximale 24-1 et une paroi distale 24-2.

Les packs batterie 20 sont destinés à être posés dans le local batterie 13 de manière empilée les uns sur les autres.

Ainsi, les packs batterie 20 définissent une pluralité de couches et une pluralité de rangées.

Chacune des couches s'étend dans un plan défini par les axes X et Y entre les murs latéraux 16, 17.

Chacune des rangées s'étend entre le plancher 18 et la plafond 19.

Au sein d'une même rangée, les packs batterie 20 peuvent être alignés selon l'axe Z ou alors peuvent être posés en quinconce, comme cela sera expliqué par la suite.

Ainsi, la paroi inférieure 23-1 de chacun des packs batterie 20 est destinée à être posée sur le plancher 18 ou sur la paroi supérieure 23-2 d'un ou de deux pack(s) batterie d'une couche de packs batterie inférieure.

De la même façon, la paroi supérieure 23-2 de chaque pack batterie 20 est destinée à servir de base de fixation pour une couche de packs batterie supérieure ou alors de bloquer l'ensemble de packs batterie contre le plafond 19.

Par ailleurs, compte tenu des marches formées par les murs 16, 17 et le plancher 18, le nombre de packs batterie 20 dans les couches est variable.

Ce nombre augmente par exemple avec chaque couche jusqu'à devenir constant à partir d'une certaine couche.

Ainsi, par exemple, lorsque les packs batterie sont posés en sept couches, les quatre premières couches comportent un nombre croissant de packs batterie 20 et les trois dernières couches comportent le même nombre de packs batterie 20 que la quatrième couche.

En revenant à la description de la figure 2, la paroi distale 24-2 du pack batterie 20 est destinée à être posée contre le mur de fond 15 du local batterie 13.

La paroi proximale 24-1 est destinée à être libre dans le local batterie 13. En particulier, cette paroi 24-1 permet à l'opérateur faisant le montage et la maintenance de l'ensemble des packs batterie de fixer chaque pack batterie 20, comme cela sera expliqué par la suite.

Chacune des parois latérales 22-1, 22-2 est destinée à entrer en contact soit avec une paroi latérale d'un pack batterie 20 adjacent de la même couche, soit avec l'un des murs latéraux 16, 17.

Pour ce faire, chacune des parois latérales 22-1, 22-2 définit une pluralité de rainures 31 de fixation.

Ainsi, comme cela est visible sur la figure 2, chaque rainure 31 s'étend entre la paroi inférieure 23-1 et la paroi supérieure 23-2 du pack batterie 20 de manière perpendiculaire à ces parois.

Dans une coupe transversale, chaque rainure 31 présente par exemple un demi-carré comprenant alors une paroi de fond et deux parois latérales.

Dans l'exemple représenté sur la figure 2, cinq rainures 31 sensiblement identiques sont formées sur chaque paroi latérale 22-1, 22-2 du pack batterie 20.

Par ailleurs, dans le même exemple, une rainure 31 sur chacune des parois latérales 22-1, 22-2 est adjacente à la paroi distale 24-2 et une autre rainure 31 est adjacente à la paroi proximale 24-1.

Autrement dit, dans cet exemple, le pack batterie 20 définit deux rainures 31 adjacentes à la paroi proximale 24-1 et deux rainures 31 adjacentes à la paroi distale 24-2.

Les rainures 31 appartenant aux parois latérales 22-1, 22-2 de packs batterie différents sont disposées en regard les unes par rapport aux autres lorsque ces packs batterie se trouve dans une position fixée.

La fixation des packs batterie 20 en une pluralité de couches s'effectue au moyen d'un système de fixation selon l'invention faisant également partie du bloc d'alimentation 11 selon l'invention.

Un tel système de fixation sera désormais expliqué en référence aux figures 2 à 11.

En particulier, le système de fixation selon l'invention comprend une pluralité de crochets muraux 55, une pluralité de crochets de fixation 56, une pluralité de cales réglables 57, une pluralité de supports latéraux 58, une barre à cales réglables 59 et des moyens de fixation de fond 60.

Les crochets muraux 55 sont destinés à fixer les packs batterie 20 selon l'axe X.

En particulier, chaque crochet mural 55 est destiné à être monté sur le mur de fond 15 en regard de la paroi distale d'un pack batterie 20 lorsque ce pack de fixation est dans la position fixée, comme cela est visible sur la figure 1.

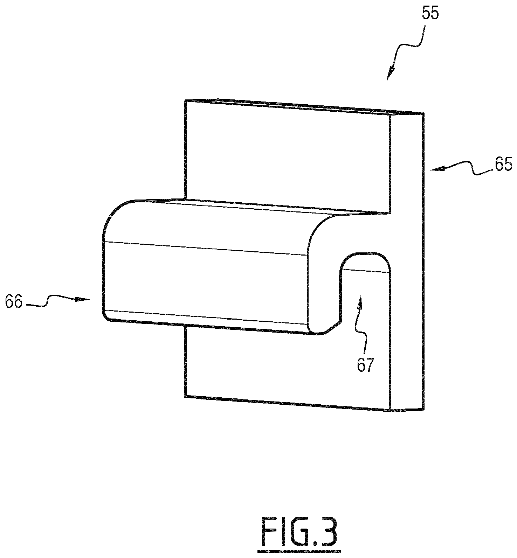

Les crochets muraux 55 sont par exemple tous identiques entre eux. Ainsi, par la suite, seul un crochet mural 55 sera expliqué en détail, en référence notamment à la figure 3.

En référence à cette figure 3, le crochet 55 comprend une base 65 destinée à être fixée sur le mur de fond 15 au moyen par exemple des vis et une partie saillante 66 formant un logement 67 pourvu d'une butée.

Dans l'exemple illustré, lorsque le crochet 55 est fixé sur le mur de fond 15, la butée du logement 67 est orientée vers le plancher 18.

Les crochets de fixation 56 sont destinés à être montés sur les parois distales 24-2 des packs batterie 20 pour coopérer avec les crochets muraux 55 correspondants.

Les crochets de fixation 56 sont par exemple sensiblement identiques entre eux.

Un crochet de fixation 56 monté sur la paroi distale 24-2 du pack batterie 20 est visible sur la figure 2.

Comme illustré sur cette figure, le crochet de fixation 56 est par exemple sensiblement identique au crochet mural 55 décrit en référence à la figure 3.

Ainsi, tout comme le crochet mural 55, le crochet de fixation 56 comprend une base 75 destinée à être fixée sur la paroi distale 24-2 du pack 20 et une partie saillante 76 formant un logement 77 pourvu d'une butée.

Contrairement au crochet mural 55, le crochet de fixation 56 est destiné à être monté sur le pack batterie 20 de sorte à être orienté vers le plafond 19.

Ainsi, chaque crochet de fixation 56 est apte à coopérer avec un crochet mural 55 lui correspondant en engageant la partie saillante 76 dans le logement 67 formé entre la partie saillante 66 et la base 65 du crochet mural 55.

Par cette coopération, chaque pack batterie 20 est bloqué selon l'axe X et avantageusement selon l'axe Z.

Les cales réglables 57 sont destinées à bloquer entre les murs latéraux 16, 17 les packs batterie 20 selon l'axe Y.

En particulier, chaque cale réglable 57 est destinée à être insérée dans un orifice formé entre deux rainures 31 de deux packs batterie 20 mis dans la position fixée l'un à côté de l'autre dans une même couche, pour bloquer entre les murs latéraux 16, 17 les packs batterie 20 selon l'axe Y par réglage de cette cale.

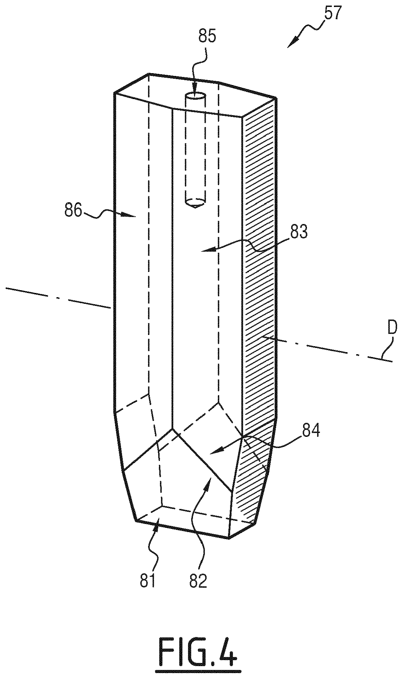

Les cales réglables 57 sont par exemple sensiblement identiques entre elles. Ainsi, par la suite, seule une cale 57 sera expliquée en détail en référence à la figure 4.

Dans l'exemple de cette figure, la cale réglable 57 est extensible selon une direction d'extension D.

En particulier, lorsque la cale 57 est insérée dans un orifice formé entre deux rainures 31 de deux packs batterie 20 mis dans la position fixée l'un à côté de l'autre dans une même couche, la cale 57 est configurée pour que la direction d'extension D coïncide avec l'axe Y.

Pour ce faire, la cale 57 présente une première partie 81 comprenant une première paroi 82 inclinée par rapport à la direction d'extension D et une deuxième partie 83 mobile par rapport à la première partie 81 et comprenant une deuxième paroi 84 inclinée par rapport à la direction D.

Par actionnement de moyens de réglage, cette deuxième paroi 84 est apte à glisser le long de la première paroi 82 en modifiant l'extension de la cale 57 selon la direction d'extension.

Ces moyens de réglage présentent par exemple une vis (non-illustrée) destinée à être insérée dans un orifice 85 défini dans une partie supérieure de la cale 57.

De plus, dans l'exemple de la figure 4, la cale 57 est à deux volets dans la mesure où elle comporte en outre une autre deuxième partie 86 mobile par rapport à la première partie 81 et disposée de manière symétrique par rapport à ladite deuxième partie 83.

Ainsi, par actionnement des moyens de réglages, les deux deuxièmes parties 83, 86 s'écartent l'une de l'autre selon la direction D.

Les supports muraux 58 sont destinés à être fixés sur les murs latéraux 16, 17 et à coopérer avec au moins certaines des rainures 31 des packs batterie 20 afin de bloquer ces packs 20 selon l'axe X.

Les supports muraux 58 sont par exemple sensiblement identiques entre eux.

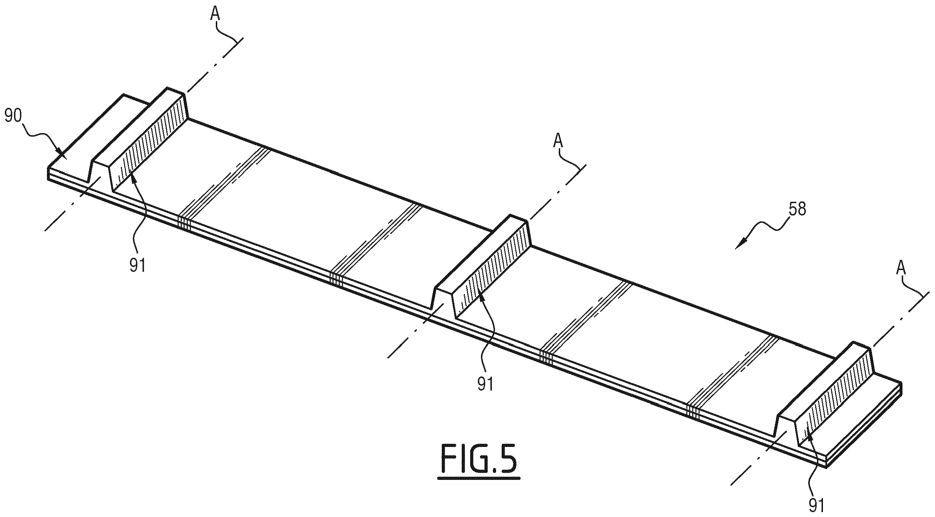

Ainsi, par la suite, seul un support mural 58 sera expliqué en détail en référence à la figure 5.

Comme cela est illustré sur la figure 5, le support mural 58 présente une plaque 90 pourvue d'une pluralité d'arêtes 91 s'étendant selon des directions parallèles appelées directions d'arête A.

La largeur de la plaque 90 est par exemple sensiblement identique à la largeur des parois latérales 22-1, 22-2 des packs batterie 20.

La longueur de cette plaque 90 est par exemple inférieure à la longueur des parois latérales 22-1, 22-2 des packs batterie 20.

La plaque 90 est destinée à être fixée sur l'un des murs latéraux 16, 17 du local 13 en regard de l'une des parois latérales 22-1, 22-2 du pack 20 correspondant.

Lorsque la plaque 90 est fixée au mur correspondant, les directions d'arête A des arêtes 91 sont parallèles à l'axe Z.

En outre, ces arêtes 91 sont espacées l'une de l'autre le long de la plaque 90 de sorte à coopérer avec les rainures 31 correspondantes de l'un de packs 20.

À cet effet, les arêtes présentent par exemple des formes complémentaires à celles des rainures 31 de sorte que chaque arête 91 puisse être reçue dans la rainure 31 correspondante. Cela permet alors de bloquer le pack correspondant 20 selon l'axe X.

Dans l'exemple illustré, le support mural 58 présente trois arêtes 91. Ces arêtes 91 sont donc aptes à coopérer avec trois rainures 31 du pack batterie 20 correspondant. Ces rainures 31 sont par exemple les rainures de milieu.

La barre à cales réglables 59 est destinée être disposée entre une dernière couche de packs batterie 20 et le plafond 19, et est configurée pour bloquer cette couche contre le plafond 19 selon l'axe Z.

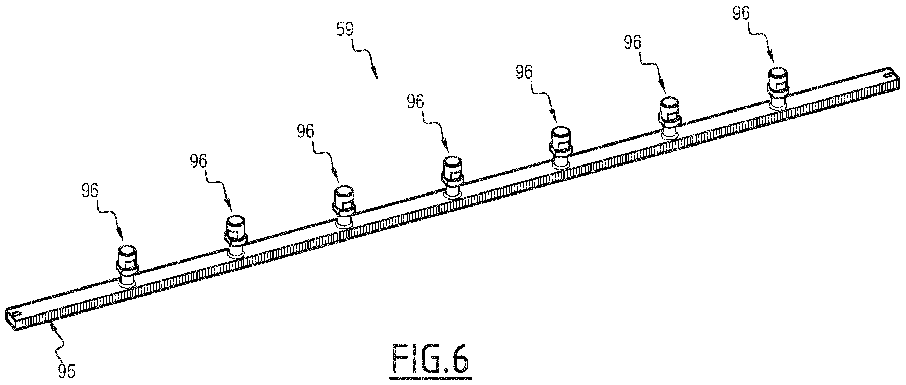

Cette barre est visible en détail sur la figure 6.

Ainsi, en référence à la figure 6, la barre 59 comprend un support 95 s'étendant selon une ligne de support et une pluralité de cales élémentaires 96 montées sur ce support 95. Chaque cale élémentaire 96 est extensible selon une direction perpendiculaire à la ligne de support.

Les moyens de fixation de fond 60 permettent de fixer un pack batterie 120 d'une dernière couche de packs batterie, ledit pack batterie étant destiné à être fixé en dernière place. Ce pack sera alors dit par la suite dernier pack batterie 120.

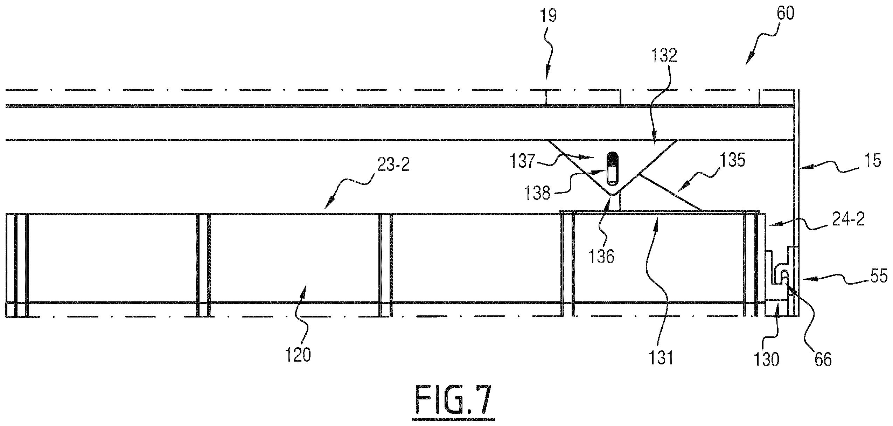

Les moyens de fixation de fond 60 peuvent être réalisés selon un premier exemple de réalisation, un deuxième exemple de réalisation et un troisième exemple de réalisation. Ces exemples de réalisation sont respectivement illustrés sur les figures 7 à 9.

Le premier exemple de réalisation peut être mis en œuvre lorsque le plafond 19 ne prévoit aucune trappe. Le deuxième et le troisième exemples quant à eux peuvent être mis en oeuvre lorsque le plafond définit une trappe 122 présentant une ouverture dans le plafond 19 permettant d'accéder au moins à la paroi distale 24-2 du dernier pack batterie 120.

Selon le premier exemple de réalisation illustré sur la figure 7, les moyens de fixation de fond 60 comprennent un pêne 130, un support rapporté 131 et un loquet 132.

Dans cet exemple de réalisation, un crochet mural 55 comme celui expliqué en référence à la figure 3 est monté sur le mur de fond 15 en regard de la paroi distale 24-2 du dernier pack batterie 120.

Le pêne 130 est destiné à être monté sur la paroi distale 24-2 du dernier pack 120 et comprend une forme parallélépipédique destinée à être engagée au-dessous de la partie saillante du crochet 55 sans être engagé dans le logement correspondant de ce crochet 55.

Ainsi, le pêne 130 permet l'insertion du dernier pack 120 selon l'axe X tout en permettant un blocage selon l'axe Z par le crochet 55.

Le support rapporté 131 est destiné être disposé sur la paroi supérieure 23-2 du dernier pack batterie 120 et le loquet 132 est destiné à être fixé sur le plafond 19 au niveau du support rapporté 131.

Ce support rapporté 131 présente une surface inclinée 135 par rapport à la paroi supérieure 23-2 et une surface perpendiculaire 136 à cette paroi 23-2.

Le loquet 132 présente une base 137 destinée à être montée sur le plafond 19 et une butée 138 montée sur la base 137 avec un ressort.

Cette butée 138 est configurée pour laisser passer le support rapporté 131 lorsque le dernier pack batterie 120 est inséré selon l'axe X vers le mur de fond 15 et pour bloquer ce dernier pack selon l'axe X lorsque le support rapporté 131 se trouve entre la base 137 et le mur de fond 15.

Autrement dit, la butée 138 est adaptée pour glisser le long de la surface inclinée 135 du support 131 lorsque le pack 120 est inséré selon l'axe X vers le mur de fond 15 et pour venir en butée contre la surface perpendiculaire 136 de ce support 131 une fois que la surface inclinée 135 est dépassée.

Pour débloquer le dernier pack 120, il est possible de prévoir une canne de déblocage qui est configurée alors pour monter la butée 138 et pour libérer donc le support rapporté 131.

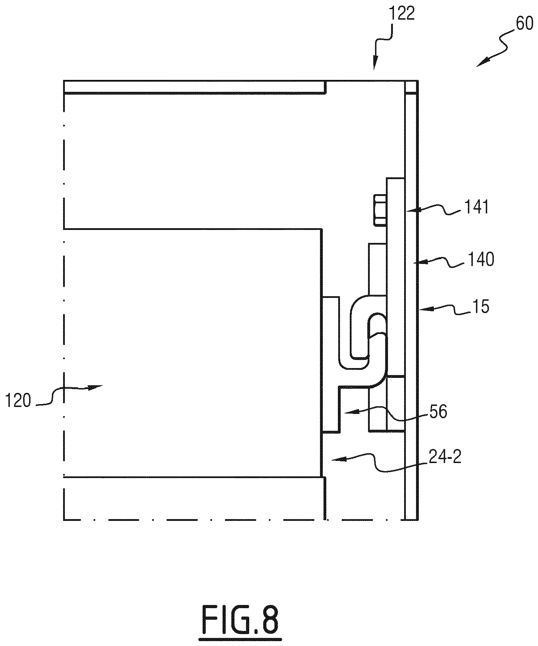

Les moyens de fixation de fond 60 selon le deuxième exemple de réalisation sont visibles sur la figure 8.

Ainsi, dans l'exemple de cette figure, un crochet de fixation 56 comme celui décrit en référence à la figure 2 est monté sur la paroi distale 24-2 du dernier pack 120.

À la place d'un crochet mural 55 expliqué précédemment, un crochet mural amovible 140 est fixé sur le mur de fond 15.

Ce crochet mural amovible 140 est adapté pour glisser sur le crochet de fixation 56 du dernier pack batterie 120 via la trappe 122.

Pour ce faire, le crochet mural amovible 140 présente une base 140 allongée présentant des orifices de fixation allongés selon l'axe Z.

Ainsi, il est possible de préfixer ce crochet au mur de fond dans une position haute, puis insérer le dernier pack 120 suivant l'axe X, puis faire glisser le crochet amovible 140 vers une position basse le long de l'axe Z afin de l'engager avec le crochet de fixation 56 du dernier pack 120.

Enfin, il est possible de fixer le crochet amovible 140 dans la position basse.

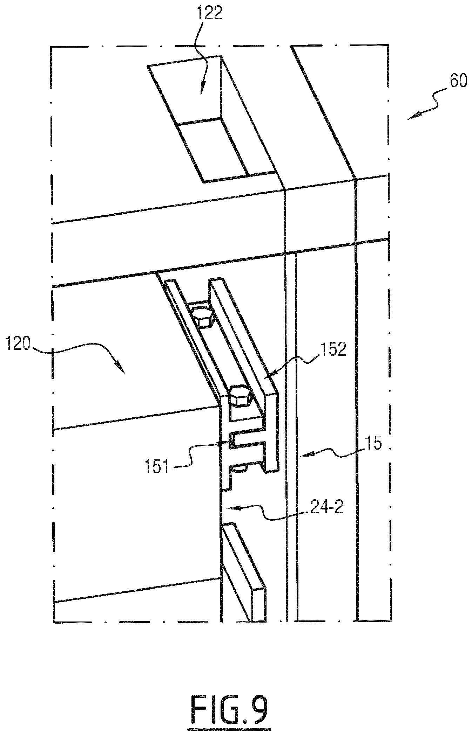

Les moyens de fixation de fond 60 selon le troisième exemple de réalisation sont visibles sur la figure 9.

Ainsi, selon ce troisième exemple de réalisation, les moyens de fixation de fond 60 comprennent un premier profil 151 destiné à être monté sur la paroi distale 24-2 du dernier pack batterie 120 et un deuxième profil destiné à être monté sur le mur de fond 15 en regard de la paroi distale 24-2 de ce dernier pack batterie 120.

Ces profils présentent des formes complémentaires aptes à s'engager l'une de l'autre suivant l'axe X. En outre, ces formes sont configurées pour être fixées dans cette position selon l'axe Z à partir de la trappe 122.

En particulier, dans l'exemple de la figure 9, le premier profil 151 présente une section transversale en forme de « U » et le deuxième profil 152 présente une section transversale en forme de « T ».

Ces profils définissent en outre des orifices de fixation disposés en regard lorsque les deux profils 151, 152 sont engagés l'un dans l'autre.

Ainsi, ces profils peuvent être fixés l'un à l'autre par exemple par insertion des vis dans les orifices de fixation à travers la trappe 122. La dernier pack batterie 120 peut ainsi être bloqué selon l'axe X et selon l'axe Z.

Bien entendu, d'autres exemples de réalisation des moyens de fixation de fond 60 sont également possibles.

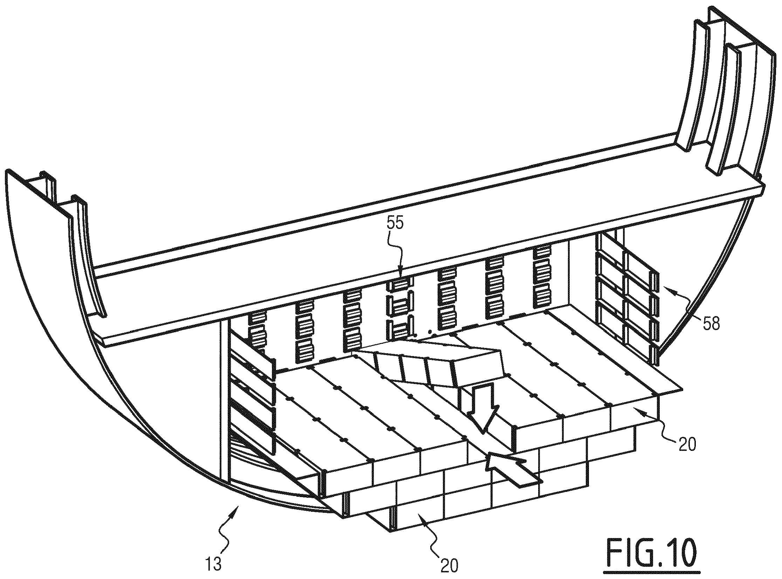

Le procédé de fixation des packs batterie 20 selon l'invention par le système de fixation selon l'invention sera désormais expliqué, en référence notamment aux figures 10 et 11 illustrant la mise en oeuvre de ce procédé.

Initialement, l'ensemble des éléments du système de fixation sont fournis.

Lors d'une étape initiale, un opérateur fixe des crochets muraux 55 sur le mur de fond 15.

Ces crochets 55 sont fixés dans les endroits prévus à être disposés en regard des parois distales 24-2 des packs batterie 20.

Lors de la même étape, l'opérateur fixe en outre les supports latéraux 58 sur les murs latéraux 16, 17 du local 13 dans les endroits prévus à être disposés en regard des parois latérales 22-1, 22-2 des packs batterie 20.

Avantageusement, lors de cette étape, l'opérateur pose en outre une mousse parasismique sur le plancher.

À la fin de cette étape, le local 13 est considéré comme prêt à recevoir les packs batterie 20.

Puis, lors de l'étape suivante, l'opérateur fixe les crochets de fixation 56 sur les parois distales 24-2 des packs 20.

Lors de l'étape suivante, l'opérateur commence à constituer une première couche de packs batterie.

Pour cela, l'opérateur pose les packs batterie 20 l'un après l'autre en engageant les crochets de fixation 56 de ces packs dans les crochets muraux 55 correspondants et en engageant en outre les rainures 31 des deux packs 20 adjacents aux murs latéraux 16, 17 dans les arêtes 91 des supports latéraux.

L'engagement des crochets de fixation 56 dans les crochets muraux 55 s'effectue soit en posant le pack correspondant au plancher dans un endroit disponible et puis en faisant glisser ce pack 20 latéralement sous le crochet mural 55 correspondant, soit en engageant d'abord le crochet de fixation 56 dans le crochet mural 55 et puis en faisant pivoter le pack correspondant pour le poser au plancher.

Pour poser le dernier pack de cette couche, seule la deuxième variante de pose est alors possible.

Lors de l'étape suivante, l'opérateur insère les cales réglables 57 entre les packs batterie de la couche de packs batterie posée.

Lors des étapes suivantes, l'opérateur constitue l'ensemble des couches intermédiaires en répétant les mêmes actions que dans le cas de la première couche.

Après la pose de chaque couche, l'opérateur la fixe avec les cales réglables 57.

Comme expliqué précédemment, lors la pose des couches intermédiaire, chaque nouvelle couche de packs est posée soit en quinconce avec les packs de la couche précédente soit de manière alignée avec les packs de cette couche précédente.

Lors de l'étape suivante, l'opérateur pose la dernière couche de packs.

Dans ce cas, tous les packs 20 sauf le dernier pack 120 sont posés en faisant glisser ces packs latéralement pour engager les crochets de fixation 56 dans les crochets muraux 55.

Le dernier pack 120 quant à lui est posé juste en le faisant glisser selon l'axe X dans l'endroit prévu à cette effet.

Puis, ce pack 120 est fixé en utilisant les moyens de fixation de fond 60 expliqués précédemment. Cette fixation se fait éventuellement via la trappe 122.

Lors de l'étape finale, l'opérateur installe la barre à calles réglables 59 pour bloquer la dernière couche contre le plafond 19.

On conçoit alors que la présente invention présente un certain nombre d'avantages.

En effet, l'invention permet de fixer des packs batterie en plusieurs couches dans un espace très restreint et subissant des chocs importants, tel qu'un navire.

La fixation s'effectue d'une manière simple tout en permettant de bloquer l'ensemble des packs batterie selon les trois axes X, Y et Z.

En outre, l'invention utilise des pièces identiques tels que les crochets 55, 56 et les cales 57 pour différentes fonctions ce qui permet de réduire le nombre d'éléments différents nécessaires pour effectuer une telle fixation.

## Revendications

1. Système de fixation d'une pluralité de packs batterie (20) de façon empilée les uns sur les autres à bord d'un navire, le navire comportant un local batterie (13) dont la longueur s'étend selon un axe X et est délimitée par un mur de fond (15), la largeur s'étend selon un axe Y et est délimitée par deux murs latéraux (16, 17) et la hauteur s'étend selon un axe Z et est délimitée par un plancher (18) et un plafond (19) ;
chaque pack batterie (20) présentant une forme sensiblement parallélépipédique définissant deux parois latérales (22-1, 22-2), une paroi proximale (24-1), une paroi distale (24-2), une paroi supérieure (23-2) et une paroi inférieure (23-1), chaque paroi latérale (22-1, 22-2) définissant une pluralité de rainures de fixation (31) ;
dans une position fixée, les packs batterie (20) étant destinés à être posés en plusieurs couches sur le plancher (18) du local batterie (19) entre ses murs latéraux (16, 17) et contre le mur de fond (15), les packs batterie (20) d'une même couche étant destinés à être posés l'un à côté de l'autre de façon adjacente par l'une de leurs parois latérales (22-1, 22-2) de sorte que les rainures de fixation (31) de ces parois latérales (22-1, 22-2) soient disposées en regard et de sorte que les parois distales (24-2) de ces packs (20) soient adjacentes au mur de fond (15) ;
le système comprend:
- une pluralité de cales réglables (57), chaque cale réglable (57) étant destinée à être insérée dans un orifice formé entre deux rainures de fixation (31) de deux packs batterie (20) mis dans la position fixée l'un à côté de l'autre dans une même couche, pour bloquer entre les murs latéraux (16, 17) les packs batterie (20) selon l'axe Y par réglage de la cale réglable (57) et le système étant **caractérisé en ce qu'**il comprend :
- une pluralité de crochets muraux (55), chaque crochet mural (55) étant destiné à être monté sur le mur de fond (15) en regard de la paroi distale (24-2) d'un pack batterie (20) dans la position fixée ;
- une pluralité de crochets de fixation (56), chaque crochet de fixation (56) étant destiné à être monté sur la paroi distale (24-2) d'un pack batterie (20) et à bloquer ce pack batterie (20) dans la position fixée selon l'axe X par coopération avec le crochet mural (55) lui correspondant.

2. Système selon la revendication 1, dans lequel chaque cale réglable (57) est extensible selon une direction d'extension (D) et lorsqu'elle est insérée dans un orifice formé entre deux rainures de fixation (31) de deux packs batterie (20) mis dans la position fixée l'un à côté de l'autre dans une même couche, est adaptée pour que la direction d'extension (D) coïncide avec l'axe Y.

3. Système selon la revendication 2, dans lequel chaque cale réglable (57) présente une première partie (81) comprenant une première paroi (82) inclinée par rapport à la direction d'extension (D) et une deuxième partie (83) mobile par rapport à la première partie (81) et comprenant une deuxième paroi (84) inclinée par rapport à la direction d'extension (D) et apte à glisser le long de la première paroi (82) en modifiant l'extension de la cale (57) selon la direction d'extension (D) ;
de préférence, chaque cale réglable (57) comprenant en outre des moyens de réglage aptes à faire glisser la deuxième paroi (84) le long de la première paroi (82).

4. Système selon l'une quelconque des revendications précédentes, comprenant en outre une pluralité de supports latéraux (58), chaque support latéral (58) comprenant une pluralité d'arêtes (91) s'étendant selon une direction d'arête (A) et configurées pour être reçues dans les rainures de fixation (31) correspondantes lorsque le support latéral (58) est disposé en regard d'une paroi latérale (22-1, 22-2) d'un pack batterie ;
chaque support latéral (58) étant destiné à être monté sur un mur latéral (16, 17) du local batterie (13) en regard d'une paroi latérale (22-1, 22-2) d'un pack batterie (20) dans la position fixée de sorte que la direction d'arête (A) soit parallèle à l'axe Z.

5. Système selon l'une quelconque des revendications précédentes, chaque crochet mural (55) est destiné à être monté sur le mur de fond (15) de sorte à exercer une force dirigée selon l'axe Z vers le plancher (18) sur le crochet de fixation (56) monté sur la paroi distale (24-2) du pack batterie (20) dans la position fixée correspondant.

6. Système selon l'une quelconque des revendications précédentes, comportant en outre :
- un pêne (130) destiné à être monté sur la paroi distale (24-2) d'un pack batterie (120) d'une dernière couche de packs batterie, ledit pack batterie étant destiné à être fixé en dernière place et étant dit dernier pack batterie, le pêne (130) étant adapté pour être engagé sous le crochet mural (55) monté sur le mur de fond (15) en regard de la paroi distale (24-2) lorsque le dernier pack batterie (120) est dans la position fixée et pour bloquer ce pack (120) selon l'axe Z ;
- un support rapporté (131) destiné à être monté sur la paroi supérieure (23-2_ du dernier pack batterie (120) ; et
- un loquet (132) comprenant :
+ une base (137) destinée à être montée au plafond (19) en regard de la paroi supérieure (23-2) du dernier pack batterie (120) lorsqu'il est dans la position fixée ;
+ une butée (138) montée sur la base (137) avec un ressort et configurée pour laisser passer le support rapporté (131) monté sur le dernier pack batterie (120) lorsque le dernier pack batterie (120) est inséré selon l'axe X vers le mur de fond (15) et pour bloquer ce dernier pack (120) selon l'axe X lorsque le support rapporté (131) se trouve entre la base (137) et le mur de fond (15).

7. Système selon l'une quelconque des revendications 1 à 5, comportant en outre :
- un premier profil (151) destiné à être monté sur la paroi distale (24-2) d'un pack batterie (120) d'une dernière couche de packs batterie, ledit pack batterie étant destiné à être fixé en dernière place et étant dit dernier pack batterie ;
- un deuxième profil (152) destiné à être monté sur le mur de fond (15) en regard de la paroi distale (24-2) du dernier pack batterie lorsque celui-ci est dans la position fixée, le deuxième profil (152) étant adapté pour être fixé sur le premier profil (151) via une trappe (122) prévue au plafond (19) pour bloquer le dernier pack batterie selon l'axe X.

8. Système selon l'une quelconque des revendications 1 à 5, comportant en outre un crochet mural amovible (140) destiné à être monté sur le mur de fond (15) en regard de la paroi distale (24-2) d'un pack batterie (120) d'une dernière couche de packs batterie, ledit pack batterie étant destiné à être fixé en dernière place et étant dit dernier pack batterie ;
le crochet mural amovible (140) étant adapté pour glisser sur le crochet de fixation (56) du dernier pack batterie (120) lorsque ce pack batterie (120) est dans la position fixée et pour être fixé dans cette position via une trappe (122) prévue au plafond (19) en bloquant le dernier pack batterie (120) selon l'axe X.

9. Système selon l'une quelconque des revendications précédentes, comportant en outre une barre à calles réglables (59) destinée être disposée entre une dernière couche de packs batterie et le plafond (19), et est configurée pour bloquer cette couche contre le plafond (19) selon l'axe Z.

10. Procédé de fixation d'une pluralité de packs batterie (20) de façon empilée les uns sur les autres à bord d'un navire, mis en œuvre au moyen du système de fixation selon l'une quelconque des revendications précédentes et comportant les étapes suivantes :
- monter les crochets muraux (55) sur le mur de fond (15) ;
- monter les crochets de fixation (56) sur les parois distales (24-2) des packs batterie (20) ;
- constituer une première couche de packs batterie (20) ou une couche de packs de batterie intermédiaire :
+ en posant chaque pack batterie (20) au plancher (18) couvert d'une mousse parasismique ou à un pack batterie d'une couche de packs batterie inférieure entre deux crochets muraux (55) correspondant à cette couche ;
+ en faisant glisser chaque pack batterie (20) vers l'un des murs latéraux (16, 17) de sorte à engager son crochet de fixation (56) dans le crochet mural (57) correspondant ; et
+ en engageant le crochet de fixation (56) d'un pack batterie (20) finalisant la couche dans le crochet mural (55) correspondant et puis, en pivotant ledit pack batterie (20) vers le plancher (18) pour le mettre en position fixée ;
- insérer les cales réglables (57) entre les packs batterie (20) d'une couche de packs batterie posée ;
- régler les cales réglables (57) pour bloquer les packs batterie (20) de la couche posée selon l'axe Z ;
- constituer une dernière couche de packs batterie :
+ en posant chaque pack batterie à un pack batterie (20) d'une couche de packs batterie inférieure entre deux crochets muraux (55) correspondant à cette couche ;
+ en faisant glisser chaque pack batterie (20) vers l'un des murs latéraux (16, 17) de sorte à engager son crochet de fixation (56) dans le crochet mural (55) correspondant ; et
+ en bloquant un dernier pack batterie (120) positionné selon l'axe X ;
- en bloquant la dernière couche de packs batterie contre le plafond selon l'axe Z.

11. Bloc d'alimentation (11) d'un navire, le navire comportant un local batterie (13) dont la longueur s'étend selon un axe X et est délimitée par un mur de fond (15), la largeur s'étend selon un axe Y et est délimitée par deux murs latéraux (16, 17) et la hauteur s'étend selon un axe Z et est délimitée par un plancher (18) et un plafond (19);
le bloc d'alimentation (11) comprenant une pluralité de packs batterie (20) fixés de façon empilée les uns sur les autres ;
chaque pack batterie (20) présentant une forme sensiblement parallélépipédique définissant deux parois latérales (22-1, 22-2), une paroi proximale (24-1), une paroi distale (24-2), une paroi supérieure (23-2) et une paroi inférieure (23-1), chaque paroi latérale (22-1, 22-2) définissant une pluralité de rainures de fixation (31) ;
le bloc d'alimentation (11) étant destiné à être installé dans le local batterie (13) de sorte que les packs batterie (20) soient posés en plusieurs couches sur le plancher (18) du local batterie (13) entre ses murs latéraux (16, 17) et contre le mur de fond (15), les packs batterie (20) d'une même couche étant posés l'un à côté de l'autre de façon adjacente par l'une de leurs parois latérales (22-1, 22-2) de sorte que les rainures de fixation (31) de ces parois latérales (22-1, 22-2) soient disposées en regard et de sorte que les parois distales (24-2) de ces packs (20) soient adjacentes au mur de fond (15) ;
le bloc d'alimentation (11) étant **caractérisé en ce qu'**il comprend en outre un système de fixation selon l'une quelconque des revendication 1 à 9 pour fixer les packs batterie (20) dans le local batterie (13).

## Patentansprüche

1. System zur Befestigung einer Vielzahl von Batteriepacks (20) übereinander gestapelt an Bord eines Schiffs, das Schiff umfassend einen Batterieraum (13), dessen Länge sich entlang einer X-Achse erstreckt und von einer Bodenwand (15) begrenzt wird, dessen Breite sich entlang einer Y-Achse erstreckt und von zwei Seitenwänden (16, 17) begrenzt ist und dessen Höhe sich entlang einer Z-Achse erstreckt und von einem Boden (18) und einer Decke (19) begrenzt ist;
wobei jeder Batteriepack (20) eine im Wesentlichen parallelepipedische Form aufweist, die zwei Seitenwände (22-1, 22-2), eine proximale Wand (24-1), eine distale Wand (24-2), eine obere Wand (23-2) und eine untere Wand (23-1) definiert, wobei jede Seitenwand (22-1, 22-2) eine Vielzahl von Befestigungsnuten (31) definiert;
wobei die Batteriepacks (20) in einer befestigten Position dazu bestimmt sind, in mehreren Lagen auf dem Boden (18) des Batterieraums (19) zwischen seinen Seitenwänden (16, 17) und gegen die Bodenwand (15) gelegt zu werden, wobei die Batteriepacks (20) einer gleichen Lage dazu bestimmt sind, nebeneinander benachbart mit einer ihrer Seitenwände (22-1, 22-2) angeordnet zu sein, sodass die Befestigungsnuten (31) dieser Seitenwände (22-1, 22-2) einander gegenüber und derart angeordnet sind, dass die distalen Wände (24-2) dieser Packs (20) an die Bodenwand (15) angrenzen;
wobei das System Folgendes umfasst:
- eine Vielzahl von einstellbaren Keilen (57), wobei jeder einstellbare Keil (57) dazu bestimmt ist, in eine Öffnung eingeführt zu werden, die zwischen zwei Befestigungsnuten (31) von zwei Batteriepacks (20) gebildet ist, die in der fixierten Position nebeneinander in einer gleichen Lage angeordnet sind, um die Batteriepacks (20) durch Einstellen des einstellbaren Keils (57) zwischen den Seitenwänden (16, 17) entlang der Y-Achse zu blockieren, und wobei das System **dadurch gekennzeichnet ist, dass** es Folgendes umfasst:
- eine Vielzahl von Wandhaken (55), wobei jeder Wandhaken (55) dazu bestimmt ist, an der Rückwand (15) gegenüber der distalen Wand (24-2) eines in der befestigten Position montierten Batteriepacks (20) montiert zu werden;
- eine Vielzahl von Befestigungshaken (56), wobei jeder Befestigungshaken (56) dazu bestimmt ist, an der distalen Wand (24-2) eines Batteriepacks (20) montiert zu werden und dieses Batteriepack (20) durch Zusammenwirken mit dem ihm entsprechenden Wandhaken (55) in der befestigten Position entlang der X-Achse zu arretieren.

2. System nach Anspruch 1, wobei jeder einstellbare Keil (57) in einer Erweiterungsrichtung (D) erweiterbar ist und, wenn er in eine Öffnung eingeführt wird, die zwischen zwei Befestigungsnuten (31) von zwei Batteriepacks (20) gebildet ist, die in der fixierten Position nebeneinander in einer gleichen Schicht angeordnet sind, angepasst ist, damit die Erweiterungsrichtung (D) mit der Y-Achse übereinstimmt.

3. System nach Anspruch 2, wobei jeder einstellbare Keil (57) einen ersten Teil (81) mit einer ersten Wand (82), die in Bezug auf die Erweiterungsrichtung (D) geneigt ist, und einen zweiten Teil (83), der in Bezug auf den ersten Teil (81) beweglich ist, aufweist und umfassend eine zweite Wand (84), die in Bezug auf die Erweiterungsrichtung (D) geneigt ist und in der Lage ist, entlang der ersten Wand (82) zu gleiten, indem die Erweiterung des Keils (57) entlang der Erweiterungsrichtung (D) verändert wird;
jeder einstellbare Keil (57) vorzugsweise ferner umfassend Einstelleinrichtungen, die geeignet sind, um die zweite Wand (84) entlang der ersten Wand (82) gleiten zu lassen.

4. System nach einem der vorherigen Ansprüche, ferner umfassend eine Vielzahl von seitlichen Stützen (58), wobei jede seitliche Stütze (58) eine Vielzahl von Kanten (91) umfasst, die sich entlang einer Kantenrichtung (A) erstrecken und konfiguriert sind, um in entsprechenden Befestigungsnuten (31) aufgenommen zu sein, wenn die seitliche Stütze (58) gegenüber einer Seitenwand (22-1, 22-2) eines Batteriepacks angeordnet ist;
wobei jede seitliche Stütze (58) dazu bestimmt ist, an einer Seitenwand (16, 17) des Batterieraums (13) gegenüber einer Seitenwand (22-1, 22-2) eines Batteriepacks (20) in der befestigten Position montiert zu werden, sodass die Kantenrichtung (A) parallel zu der Z-Achse ist.

5. System nach einem der vorherigen Ansprüche, wobei jeder Wandhaken (55) dazu bestimmt ist, an der Rückwand (15) montiert zu werden, um eine entlang der Z-Achse zum Boden (18) gerichtete Kraft auf den an der distalen Wand (24-2) des Batteriepacks (20) montierten Befestigungshaken (56) in der entsprechenden fixierten Position auszuüben.

6. System nach einem der vorherigen Ansprüche, ferner umfassend:
- einen Riegel (130), der dazu bestimmt ist, an der distalen Wand (24-2) eines Batteriepacks (120) einer letzten Lage von Batteriepacks montiert zu werden, wobei der Batteriepack dazu bestimmt ist, an der letzten Stelle befestigt zu werden und als letztes Batteriepack bezeichnet wird, wobei der Riegel (130) angepasst ist, um unter den Wandhaken (55) zu greifen, der an der Rückwand (15) gegenüber der distalen Wand (24-2) montiert ist, wenn der letzte Batteriepack (120) in der befestigten Position ist, und um diesen Pack (120) entlang der Z-Achse zu arretieren;
- eine aufgesetzte Halterung (131), die dazu bestimmt ist, um an der oberen Wand (23-2) des letzten Batteriepacks (120) angebracht zu werden; und
- ein Schnappschloss (132), umfassend:
+ eine Basis (137), die dazu bestimmt ist, an der Decke (19) gegenüber der oberen Wand (23-2) des letzten Batteriepacks (120) montiert zu werden, wenn er in der befestigten Position ist;
+ einen Anschlag (138), der mit einer Feder an der Basis (137) montiert und konfiguriert ist, um die an dem letzten Batteriepack (120) montierte aufgesetzte Halterung (131) durchzulassen, wenn der letzte Batteriepack (120) entlang der X-Achse in Richtung der Rückwand (15) eingeführt wird, und um diesen letzten Pack (120) entlang der X-Achse zu arretieren, wenn die aufgesetzte Halterung (131) zwischen der Basis (137) und der Rückwand (15) ist.

7. System nach einem der vorherigen Ansprüche 1 bis 5, ferner umfassend:
- ein erstes Profil (151), das dazu bestimmt ist, an der distalen Wand (24-2) eines Batteriepacks (120) einer letzten Lage von Batteriepacks montiert zu werden, wobei der Batteriepack dazu bestimmt ist, an letzter Stelle befestigt zu werden, und als letztes Batteriepack bezeichnet zu werden;
- ein zweites Profil (152), das dazu bestimmt ist, an der Rückwand (15) gegenüber der distalen Wand (24-2) des letzten Batteriepacks montiert zu werden, wenn dieser in der befestigten Position ist, wobei das zweite Profil (152) angepasst ist, um über eine Klappe (122), die an der Decke (19) bereitgestellt ist, an dem ersten Profil (151) befestigt zu werden, um den letzten Batteriepack entlang der X-Achse zu arretieren.

8. System nach einem der Ansprüche 1 bis 5, ferner umfassend einen abnehmbaren Wandhaken (140), der dazu bestimmt ist, an der Rückwand (15) gegenüber der distalen Wand (24-2) eines Batteriepacks (120) einer letzten Lage von Batteriepacks montiert zu werden, wobei der Batteriepack dazu bestimmt ist, an letzter Stelle befestigt zu werden und als letzter Batteriepack bezeichnet zu werden;
wobei der abnehmbare Wandhaken (140) angepasst ist, um auf dem Befestigungshaken (56) des letzten Batteriepacks (120) zu gleiten, wenn dieser Batteriepack (120) in der befestigten Position ist, und dass er in dieser Position über eine an der Decke (19) bereitgestellte Klappe (122) befestigt wird, indem der letzte Batteriepack (120) entlang der X-Achse arretiert wird.

9. System nach einem der vorherigen Ansprüche, ferner umfassend eine verstellbare Keilstange (59), die dazu bestimmt ist, um zwischen einer letzten Lage von Batteriepacks und der Decke (19) angeordnet zu werden und konfiguriert ist, um diese Schicht entlang der Z-Achse an der Decke (19) zu arretieren.

10. Verfahren zum Befestigen einer Vielzahl von Batteriepacks (20) auf übereinander gestapelte Weise an Bord eines Schiffs, das mittels des Befestigungssystems nach einem der vorherigen Ansprüche implementiert wird und die folgenden Schritte umfasst:
- Montieren der Wandhaken (55) an der Rückwand (15);
- Montieren der Befestigungshaken (56) an den distalen Wänden (24-2) der Batteriepacks (20);
- Bilden einer ersten Lage von Batteriepacks (20) oder einer mittleren Lage von Batteriepacks:
+ indem jeder Batteriepack (20) auf den mit erdbebensicherem Schaumstoff bedeckten Boden (18) oder auf ein Batteriepaket einer unteren Lage von Batteriepaketen zwischen zwei Wandhaken (55), die dieser Lage entsprechen, gelegt wird;
+ indem jeder Batteriepack (20) in Richtung einer der Seitenwände (16, 17) verschoben wird, sodass sein Befestigungshaken (56) in den entsprechenden Wandhaken (57) eingreift; und
+ indem der Befestigungshaken (56) eines Batteriepacks (20), der die Lage abschließt, in den entsprechenden Wandhaken (55) eingreift und der Batteriepack (20) dann in Richtung des Bodens (18) geschwenkt wird, um ihn in die befestigte Position zu bringen;
- Einsetzen der einstellbaren Keile (57) zwischen die Batteriepacks (20) einer Lage von gelegten Batteriepacks;
- Einstellen der einstellbaren Keile (57), um die Batteriepacks (20) der gelegten Lage entlang der Z-Achse zu blockieren;
- Bilden einer letzten Lage aus Batteriepacks:
+ indem jeder Batteriepack mit einem Batteriepack (20) einer unteren zwischen zwei Wandhaken (55), die dieser Lage entsprechen, gelegt wird;
+ indem jeder Batteriepack (20) in Richtung einer der Seitenwände (16, 17) verschoben wird, sodass sein Befestigungshaken (56) in den entsprechenden Wandhaken (55) eingreift; und
+ indem ein letzter Batteriepack (120) arretiert wird, der entlang der X-Achse positioniert ist;
- indem die letzte Lage der Batteriepacks an der Decke entlang der Z-Achse arretiert werden.

11. Stromversorgungseinheit (11) eines Schiffs, das Schiff umfassend einen Batterieraum (13), dessen Länge sich entlang einer X-Achse erstreckt und von einer Bodenwand (15) begrenzt ist, dessen Breite sich entlang einer Y-Achse erstreckt und von zwei Seitenwänden (16, 17) begrenzt ist und dessen Höhe sich entlang einer Z-Achse erstreckt und von einem Boden (18) und einer Decke (19) begrenzt ist;
die Stromversorgungseinheit (11) umfassend eine Vielzahl von Batteriepacks (20), die auf gestapelte Weise übereinander befestigt sind;
wobei jeder Batteriepack (20) eine im Wesentlichen parallelepipedische Form aufweist, die zwei Seitenwände (22-1, 22-2), eine proximale Wand (24-1), eine distale Wand (24-2), eine obere Wand (23-2) und eine untere Wand (23-1) definiert, wobei jede Seitenwand (22-1, 22-2) eine Vielzahl von Befestigungsnuten (31) definiert;
wobei die Stromversorgungseinheit (11) dazu bestimmt ist, in dem Batterieraum (13) installiert zu werden, sodass die Batteriepacks (20) in mehreren Lagen auf dem Boden (18) des Batterieraums (13) zwischen seinen Seitenwänden (16, 17) und gegen die Rückwand (15) gelegt werden, wobei die Batteriepacks (20) einer gleichen Lage dazu bestimmt sind, nebeneinander benachbart mit einer ihrer Seitenwände (22-1, 22-2) angeordnet zu sein, sodass die Befestigungsnuten (31) dieser Seitenwände (22-1, 22-2) einander gegenüber und derart angeordnet sind, dass die distalen Wände (24-2) dieser Packs (20) an die Bodenwand (15) angrenzen;
wobei die Stromversorgungseinheit (11) **dadurch gekennzeichnet ist, dass** sie ferner ein Befestigungssystem nach einem der Ansprüche 1 bis 9 umfasst, um die Batteriepacks (20) in dem Batterieraum (13) zu befestigen.

## Claims

1. System for fixing a plurality of battery packs (20) stacked one on top of the other on board a vessel, the vessel comprising a battery room (13) whose length extends along an X axis and is delimited by a back wall (15), the width extends along a Y axis and is delimited by two lateral walls (16, 17) and the height extends along a Z axis and is delimited by a floor (18) and a ceiling (19);
each battery pack (20) presenting a substantially parallelepipedal shape defining two lateral walls (22-1, 22-2), a proximal wall (24-1), a distal wall (24-2), an upper wall (23-2) and a bottom wall (23-1), each lateral wall (22-1, 22-2) defining a plurality of fixing grooves (31);
in a fixed position, the battery packs (20) being designed to be disposed in several layers on the floor (18) of the battery room (19) between its lateral walls (16, 17) and against the back wall (15), the battery packs (20) of the same layer being designed to be disposed next to each other adjacent by one of their lateral walls (22-1, 22-2) so that the fixing grooves (31) of these lateral walls (22-1, 22-2) are disposed opposite and so that the distal walls (24-2) of these packs (20) are adjacent to the back wall (15);
the system comprises:
- a plurality of adjustable wedges (57), each adjustable wedge (57) being designed to be inserted into a hole formed between two fixing grooves (31) of two battery packs (20) disposed in the fixed position next to each other on the other in the same layer, to block the battery packs (20) between the lateral walls (16, 17) along the Y axis by adjusting the adjustable wedge (57);
the system being **characterized in that** it further comprises:
- a plurality of wall hooks (55), each wall hook (55) being designed to be mounted on the back wall (15) facing the distal wall (24-2) of a battery pack (20) in the fixed position;
- a plurality of fixing hooks (56), each fixing hook (56) being designed to be mounted on the distal wall (24-2) of a battery pack (20) and to block this battery pack (20) in the position fixed along the X axis by interaction with the corresponding wall hook (55).

2. System according to claim 1, wherein each adjustable wedge (57) is extendable in an extension direction (D) and when inserted into a hole formed between two fixing grooves (31) of two battery packs (20) disposed in the fixed position next to each other in the same layer, is designed so that the direction of extension (D) coincides with the Y axis.

3. System according to claim 2, wherein each adjustable wedge (57) presents a first part (81) comprising a first wall (82) inclined with respect to the direction of extension (D) and a second part (83) mobile relative to the first part (81) and comprising a second wall (84) inclined with respect to the direction of extension (D) and able to slide along the first wall (82) by modifying the extension of the wedge (57) in the direction of extension (D);
preferably, each adjustable wedge (57) further comprising adjustment means capable of sliding the second wall (84) along the first wall (82).

4. System according to any one of the preceding claims, further comprising a plurality of lateral brackets (58), each lateral bracket (58) comprising a plurality of ridges (91) extending in a ridge direction (A) and designed to be received in the corresponding fixing grooves (31) when the lateral bracket (58) is disposed opposite a lateral wall (22-1, 22-2) of a battery pack;
each lateral bracket (58) being designed to be mounted on a lateral wall (16, 17) of the battery room (13) facing a lateral wall (22-1, 22-2) of a battery pack (20) in the fixed position so that the edge direction (A) is parallel to the Z axis.

5. System according to any one of the preceding claims, each wall hook (55) is designed to be mounted on the back wall (15) so as to exert a force directed along the Z axis towards the floor (18) on the fixing hook (56) mounted on the distal wall (24-2) of the battery pack (20) in the corresponding fixed position.

6. System according to any one of the preceding claims, further comprising:
- a bolt (130) designed to be mounted on the distal wall (24-2) of a battery pack (120) of a last layer of battery packs, said battery pack being designed to be fixed in the last place and being said last battery pack, the bolt (130) being designed to be engaged under the wall hook (55) mounted on the back wall (15) facing the distal wall (24-2) when the last battery pack (120) is in the fixed position and to block this pack (120) along the Z axis;
- an attached bracket (131) designed to be mounted on the upper wall (23-2) of the last battery pack (120); and
- a latch (132) comprising:
+ a base (137) designed to be mounted on the ceiling (19) opposite the upper wall (23-2) of the last battery pack (120) when it is in the fixed position;
+ a stop (138) mounted on the base (137) with a spring and designed to allow the insert (131) mounted on the last battery pack (120) to pass through when the last battery pack (120) is inserted along the X axis towards the back wall (15) and to block the latter pack (120) along the X axis when the attached support (131) is located between the base (137) and the back wall (15).

7. System according to any one of claims 1 to 5, further comprising:
- a first profile (151) designed to be mounted on the distal wall (24-2) of a battery pack (120) of a last layer of battery packs, said battery pack being designed to be fixed in the last place and being said last battery pack;
- a second profile (152) designed to be mounted on the back wall (15) facing the distal wall (24-2) of the last battery pack when the latter is in the fixed position, the second profile (152) being designed to be fixed on the first profile (151) via a hatch (122) provided on the ceiling (19) to block the last battery pack along the X axis.

8. System according to any one of claims 1 to 5, further comprising a removable wall hook (140) designed to be mounted on the back wall (15) facing the distal wall (24-2) of a battery pack (120) of a last layer of battery packs, said battery pack being designed to be fixed last and being said to be the last battery pack;
the removable wall hook (140) being designed to slide on the fixing hook (56) of the last battery pack (120) when this battery pack (120) is in the fixed position and to be fixed in this position via a hatch (122) provided on the ceiling (19) by blocking the last battery pack (120) along the X axis.

9. System according to any one of the preceding claims, further comprising an adjustable wedge bar (59) designed to be disposed between a last layer of battery packs and the ceiling (19), and designed to block this layer against the ceiling (19) along the Z axis.

10. A method of fixing a plurality of battery packs (20) stacked one on top of the other on board a vessel, implemented by means of the fixing system according to any one of the preceding claims and comprising the following steps:
- mount the wall hooks (55) on the back wall (15);
- fit the fixing hooks (56) on the distal walls (24-2) of the battery packs (20);
- constitute a first layer of battery packs (20) or an intermediate layer of battery packs:
+ by disposing each battery pack (20) on the floor (18) covered with seismic foam or on a battery pack with a lower layer of battery packs between two wall hooks (55) corresponding to this layer;
+ by sliding each battery pack (20) towards one of the lateral walls (16, 17) so as to engage its fixing hook (56) in the corresponding wall hook (57); and
+ by engaging the fixing hook (56) of a battery pack (20) finalizing the layer in the corresponding wall hook (55) and then, by pivoting said battery pack (20) towards the floor (18) to put it in fixed position;
- insert the adjustable wedges (57) between the battery packs (20) of a layer of installed battery packs;
- adjust the adjustable wedges (57) to block the battery packs (20) of the layer laid along the Z axis;
- constitute a last layer of battery packs:
+ by disposing each battery pack on a battery pack (20) of a lower battery pack layer between two wall hooks (55) corresponding to this layer;
+ by sliding each battery pack (20) towards one of the lateral walls (16, 17) so as to engage its fixing hook (56) in the corresponding wall hook (55); and
+ by blocking a last battery pack (120) positioned along the X axis;
+ by blocking the last layer of battery packs against the ceiling along the Z axis.

11. Power supply unit (11) of a vessel, the vessel comprising a local battery (13) whose length extends along an X axis and is delimited by a back wall (15), the width extends along a Y axis and is delimited by two lateral walls (16, 17) and the height extends along a Z axis and is delimited by a floor (18) and a ceiling (19);
the power supply unit (11) comprising a plurality of battery packs (20) attached stacked on top of each other;
each battery pack (20) presenting a substantially parallelepipedal shape defining two lateral walls (22-1, 22-2), a proximal wall (24-1), a distal wall (24-2), an upper wall (23-2) and a bottom wall (23-1), each lateral wall (22-1, 22-2) defining a plurality of fixing grooves (31);
the power supply unit (11) being designed to be installed in the battery room (13) so that the battery packs (20) are laid in several layers on the floor (18) of the battery room (13) between its lateral walls (16, 17) and against the back wall (15), the battery packs (20) of the same layer being disposed adjacent to each other adjacent to one of their lateral walls (22-1, 22-2) so that the fixing grooves (31) of these lateral walls (22-1, 22-2) are disposed opposite and so that the distal walls (24-2) of these packs (20) are adjacent to the back wall (15);
the power supply unit (11) being **characterized in that** it further comprises a fixing system according to any one of claims 1 to 9 for fixing the battery packs (20) in the battery room (13).
